# EUROPÄISCHE PATENTSCHRIFT

(11) **EP 1 954 637 B1**
(45) Veröffentlichungstag und Bekanntmachung des Hinweises auf die Patenterteilung: **13.06.2012**
(21) Anmeldenummer: 06818911.7
(22) Anmeldetag: 29.11.2006
(51) Int. Cl.: C03B 19/02, C03B 11/07, C03B 11/12

(54) **VERFAHREN ZUM HERSTELLEN VON GLASGEGENSTÄNDEN, INSBESONDERE VERSCHLUSSKÖRPERN AUS GLAS, SOWIE VORRICHTUNG, ANLAGE UND DEREN VERWENDUNG**
PROCESS FOR PRODUCING GLASS ARTICLES, IN PARTICULAR CLOSURE ELEMENTS MADE OF GLASS, AND DEVICE, INSTALLATION AND USE THEREOF
PROCEDE DE FABRICATION D'OBJETS EN VERRE, EN PARTICULIER DE CORPS DE FERMETURE EN VERRE, AINSI QUE DISPOSITIF, INSTALLATION ET LEUR UTILISATION

(30) Priorität: 30.11.2005 DE 102005057125
(43) Veröffentlichungstag der Anmeldung: 13.08.2008
(73) Patentinhaber: FÜLLER GLASTECHNOLOGIE VERTRIEBS-GMBH, 94518 Spiegelau (DE)
(72) Erfinder: FÜLLER, Hermann, 94566 Riedlhütte (DE)
(74) Vertreter: Popp, Eugen
(86) Internationale Anmeldenummer: PCT/EP2006/011465
(87) Internationale Veröffentlichungsnummer: WO 2007/062830

(56) Entgegenhaltungen:
- EP-A- 1 391 433
- BE-A- 484 382
- DE-A1- 10 320 345
- FR-A- 622 005
- GB-A- 1 342 412

## Beschreibung

Die Erfindung betrifft ein Verfahren zum Herstellen von Glasgegenständen, eine Vorrichtung zum Herstellen von Glasgegenständen sowie eine Anlage zur Herstellung von Glasgegenständen und die Verwendung einer vorgenannten Vorrichtung und/oder Anlage nach dem Oberbegriff einer der Ansprüche 1, 9, 13 und 15.

Die Herstellung von Glasgegenständen, insbesondere von Verschlußkörpern aus Glas, wie beispielsweise Glasstopfen, die zum Verschließen von Flaschen bekannt sind, erfolgt üblicherweise mittels eines sogenannten Injektionsverfahrens, wobei in eine geschlossene Gußform von deren Unter- oder Oberseite flüssiges Glasmaterial eingespritzt wird, das einen Formhohlraum ausfüllt. Nach einer Abkühlung und Verfestigung muß der verfestigte Glasstrang zuführseitig abgeschnitten werden. Als nachteilig bei diesem Verfahren hat sich erwiesen, daß zum einen die Schnittstelle, an welcher der Glasstopfen von dem Glasstrang abgetrennt worden ist, nach der Formgebung noch geschliffen und poliert werden muß. Darüber hinaus fällt bei dieser Art Herstellung Restglas an, das beseitigt oder gegebenenfalls einer Wiederverwertung zugeführt werden muß. Insofern ist das Injektionsverfahren zur Herstellung von Glasgegenständen technisch aufwendig und deshalb teuer.

Eine weitere Möglichkeit zur Herstellung von mit einem Kopfteil versehenen Glasstopfen zum Verschluß von Weinflaschen ist in der DE 103 20 345 A1 beschrieben. Dort wird geschmolzenes Glas in eine Negativform eines herzustellenden Stopfens gefüllt und verpreßt, wobei ein axial verschiebbarer Preßstempel zur Ausbildung einer Toleranzen kompensierenden Vertiefung im Kopfteil des Stopfens vorgesehen ist. Das dort beschriebene Verfahren ist unter anderem deshalb sehr aufwendig, da der axial verschiebbare Preßstempel zur Herstellung eines Stopfens exakt über dem Kopfteil des Stopfens positioniert werden muß. Sodann ist es notwendig, daß der Preßstempel mit einem definierten Druck auf das Kopfteil des Stopfens einwirkt, so daß in der dortigen Form vorhandene Toleranzen durch den durch den Preßstempel ausgeübten Druck ausgeglichen werden können. Sodann muß der Preßstempel aus der eingepreßten Vertiefung im Kopfteil des Stopfens entfernt werden. Solcherart hergestellte Glasstopfen weisen somit in nachteiliger Weise immer eine Vertiefung in deren Kopfteil auf. Darüber hinaus ist deren Herstellung aufgrund des notwendigen Preßvorganges und des damit einhergehenden Zeitbedarfs zeitaufwendig. Ein weiterer Nachteil besteht darüber hinaus darin, daß sowohl die dortige Negativform als auch der Preßstempel regelmäßig gereinigt werden müssen, da durch den erforderlichen Preßdruck zu befürchten ist, daß sowohl an Preßstempel als auch in der Negativform Glasrückstände verbleiben.

Weitere Verfahren, sowie eine Vorrichtung zur Herstellung von geformtem Glas sind ferner in den Druckschriften FR 622 005, GB 1 342 412 und EP 1 391 433 beschrieben, wobei die vorgenannte französische Druckschrift ein Verfahren zum Formen von Glasgegenständen beschreibt, bei dem Überdruck angewandt wird, um Glas in eine Form einzubringen. Dem gegenüber beschreibt die GB 1 342 412 eine Formvorrichtung zum Herstellen von festen scheibenförmigen Glasrohlingen, bei der der hergestellte Glasartikel mittels Überdruck aus der Form entfernt wird. Die EP 1 391 433 A2 beschreibt ferner ein Verfahren zur Formung von Glas oder Glaskeramik, bei dem eine Glaskeramik aus einem Ausgangsglas durch Giessen hergestellt wird, das durch eine Wärmebehandlung in eine Keatit-Glaskeramik mit überwiegender Keatit-Mischkristallphase umgewandelt wird. Mit dieser Keatit-Glaskeramikform können durch einen Senkprozess aus Rohlingen unter Schwerkrafteinfluss bei einer Temperatur oberhalb der Transformationstemperatur des Rohlings Formkörper hergestellt werden.

Darüber hinaus beschreibt die DE 100 20 396 A1 ein Verfahren und eine Vorrichtung zum Herstellen eines Glasverschlussstopfens für Flaschen-Bügelverschlüsse durch Einbringen eines Postens fluiden Glasmaterials in eine Form mittels Unterdruck, wobei das dortige Verfahren ein Abkühlen des Glaspostens mit einem Kühlstempel umfasst, der auf die freie Oberfläche des Postens verbracht wird und zur Abfuhr von Wärme aus dem in die Form eingebrachten Glasposten verwendet wird. Dieses Verfahren weist jedoch einen wesentlichen Nachteil auf, der in dem vorbeschriebenen Abkühlen des Glaspostens begründet liegt. So führt ein solches Abkühlen des Glaspostens zwangsläufig zu unkontrollierten und aufgrund der dortigen Vorgehensweise und Vorrichtung unkontrollierbaren Schrumpfungsprozessen des Glaspostens in der dortigen Form, da das Glas im Bereich des Kontakts mit dem Kühlstempel sehr schnell erstarrt und sodann an dieser Stelle verfestigt, während übrige Oberflächen des Glaspostens weiter flüssig bleiben. Da der heiße Glasposten im Zuge des Abkühlens eine Volumenverminderung erfährt, ein Teil des Glaspostens jedoch aufgrund der Wirkung des Kühlstempels bereits erstarrt ist, wirkt sich die Volumenverminderung auf die verbleibende flüssige Glasoberfläche aus, wobei diese Auswirkung zu unkontrollierten Schrumpfungsprozessen und daraus resultierenden Oberflächendefekten führt.

Der Erfindung liegt die Aufgabe zugrunde, ein Verfahren sowie eine Vorrichtung und Anlage zur Verfügung zu stellen, mittels dem, bzw. der, eine kosteneffiziente Möglichkeit zur Herstellung von Glasgegenständen unterschiedlicher Form und Geometrie, respektive Oberflächengestaltung, insbesondere Glasstopfen, geschaffen wird und das darüber hinaus die Vermeidung der vorgenannten Nachteile ermöglicht.

Diese Aufgabe wird durch ein Verfahren nach Anspruch 1, eine Vorrichtung nach Anspruch 9, eine Anlage nach Anspruch 13 sowie durch die Verwendung einer Vorrichtung und/oder Anlage wie vorerwähnt, nach Anspruch 15 gelöst.

Insbesondere wird die Aufgabe durch ein Verfahren zum Herstellen von Glasgegenständen, insbesondere Verschlußkappen aus Glas, wie beispielsweise Glasstopfen gelöst, wobei folgende Schritte durchgeführt werden:
a) Einfüllen einer Portionseinheit von flüssigem oder pastösem Glas in eine Negativform eines herzustellenden Gegenstands;
b) Anlegen von Unterdruck an die Negativform für einen Zeitraum, der ausreicht, daß das flüssige oder pastöse Glas in die Negativform gesaugt und in eine paßgenaue Anlage mit der Wandung der Negativform verbracht wird;
c) Abkühlen und Entformen des geformten Glasgegenstands.

Ein wesentlicher Punkt der Erfindung liegt darin, daß das Glas, das in dünnflüssiger oder pastöser Form vorliegen kann, allein durch sein Eigengewicht und durch das Anlegen von Unterdruck an der Negativform in diese quasi "eingesaugt" und in eine paßgenaue Anlage mit der Wandung der Negativform verbracht wird. Da innerhalb der gesamten Negativform ein einheitlicher Unterdruck vorliegt, erfolgt die Einformung des flüssigen oder pastösen Glases in der gesamten Negativform einheitlich, ohne daß innerhalb des Glases aufgrund einer punktuellen Kraftausübung, wie dies beispielsweise unter Verwendung eines Preßstempels der Fall wäre, Spannungen auftreten.

Das Glas kann sich vielmehr aufgrund des Fehlens einer punktuell wirkenden Kraft unter dem Einfluß des wirkenden Unterdrucks in der Negativform optimal entfalten und in thermodynamisch günstigster Form an die Wandung der Negativform anlegen. Aus diesem Grund kann das Glas des Stopfens in seiner thermodynamisch günstigsten Form verfestigen, so daß eine spätere spannungsbedingte Bruchgefahr, insbesondere gegenüber Preßglasstopfen, minimal ist.

Das Verfüllen der Portionseinheiten von flüssigem oder pastösem Glas in die Negativform des herzustellenden Gegenstands kann dadurch erfolgen, daß das warme Glas tropfenförmig in die Negativform eingefüllt wird. Zu diesem Zweck wird ein Zuführrohr vorzugsweise so dimensioniert, daß ein Tropfenabriß dann erfolgt, wenn die erforderliche Glasmenge für die Portionseinheit zum Verfüllen der Negativform ausreichend ist.

Gemäß einer weiteren Ausführungsform kann die Portionseinheit von flüssigem oder pastösem Glas von einem Strang aus flüssigem oder pastösem Glas abgeschnitten und in die Negativform eingefüllt werden. Ein vorheriges Einfüllen des Glases in die Negativform und anschließendes Abschneiden der Portionseinheit ist ebenso möglich. Dies ist insbesondere dann von Vorteil, wenn Glas mit einer niedrigeren Temperatur verwendet wird, so daß dieses nicht dünnflüssig, sondern dickflüssig bis pastös vorliegt.

Es sei an dieser Stelle erwähnt, daß die Portionseinheit so bemessen sein kann, daß die Negativform eben ausgefüllt ist oder noch ein verbleibendes oberes Leervolumen aufweist. Darüber hinaus ist es möglich, unter Ausnutzung der Oberflächenspannung des Glases, soviel Glas in die Negativform einzufüllen, daß die Portionseinheit etwas aus der Negativform herausragt, ohne daß das Glas jedoch zur Seite wegfließt. Erfindungsgemäß wird eine äußere, insbesondere einer Einfüllöffnung der Negativform zugewandte Oberfläche des in der Negativform befindlichen Glases wärmebehandelt, wobei vorzugsweise ein Brenner, insbesondere Gebläsebrenner, verwendet wird. Auf diese Weise ist es möglich, durch ein kurzes Aufschmelzen der Glasoberfläche ein Verfließen und somit Einglätten des Glases zu erreichen, so daß eine vollkommen glatte Oberfläche mit einem optisch guten Design entsteht. Kleinere Kanten oder Unebenheiten können auf diese Weise in vorteilhafter und sehr einfacher Weise geglättet und beseitigt werden.

Die Negativform und/oder ein die Negativform aufweisendes Gehäuse werden erfindungsgemäß temperiert, insbesondere gekühlt, was vorzugsweise mit Wasser durchgeführt wird. Auf diese Weise wird erreicht, daß die Negativform und/oder das die Negativform aufweisende Gehäuse immer auf einer optimalen Prozeßtemperatur gehalten wird. Diese Prozeßtemperatur liegt erfindungsgemäß bei maximal 70°C, vorzugsweise im Bereich zwischen 50°C und 65°C. Durch die Kühlung des Gehäuses bzw. der Negativform wird darüber hinaus erreicht, daß das mit einer Temperatur im Bereich von 1100°C in die Negativform eingebrachte Glas unmittelbar bei einem Kontakt mit der Wandung der Negativform sehr schnell abkühlt und dadurch verfestigt, während weiter von der Wandung der Negativform entferntes Glas, also im Inneren des herzustellenden Glasgegenstands vorhandenes Glas, aufgrund des Fehlens eines unmittelbaren Kontaktes mit der Wandung der Negativform etwas länger plastisch verbleibt und sich die Moleküle dieser Glasmasse thermodynamisch am günstigsten ausrichten können. Da eine Wärmeableitung am stärksten an den Stellen auftritt, an denen ein unmittelbarer Kontakt mit der inneren Wandung der Negativform besteht, kühlt die der Einfüllöffnung der Negativform zugewandte Seite des zu formenden Glasgegenstandes am langsamsten ab, so daß sich an dieser Seite Spannungen bis zuletzt abbauen können und, wie vorerwähnt, ein äußerst spannungsarmer Glasgegenstand entsteht.

Es sei erwähnt, daß eine Wärmebehandlung der in Richtung der Einfüllöffnung der Negativform gewandten Oberfläche des Glasgegenstands gleichzeitig mit dessen Verfestigung im Inneren der Negativform erfolgen kann. Auf diese Weise wird zum einen die erwärmte Oberfläche länger plastisch gehalten, so daß sich hier Spannungen länger abbauen können. Zum anderen kann durch die gleichzeitige Wärmebehandlung eine Beschleunigung des Verfahrens zur Herstellung der Glasgegenstände erfolgen, da auf eine nachfolgende Wärmebehandlung des abgekühlten Gegenstandes verzichtet werden kann.

Erfindungsgemäß wird die Negativform zum Entformen, vorzugsweise durch eine Linearverschiebung von wenigstens einem Formelement von die Negativform bildenden Formelementen geöffnet. Da ein erfindungsgemäß hergestellter Glasstopfen unterhalb von dessen Kopfteil eine durch einen Steg begrenzte Nut aufweist, in welche nach der Herstellung zum Verschließen einer Flasche eine Dichtung angebracht wird, ist zum Entformen des Stopfens die Öffnung der Negativform notwendig, wobei dies in vorteilhafter Weise mittels eines Pneumatikzylinders erfolgt, durch den eine Linearbewegung eines die Negativform bildenden Formelements durchgeführt wird, so daß der fertige Stopfen aus der Form entnommen werden kann. Es sei an dieser Stelle erwähnt, daß eine, beispielsweise aus zwei Formelementen zusammengesetzte Negativform so geöffnet werden kann, daß beide die Form bildenden Formelemente in entgegengesetzte Richtungen linear bewegt werden. Auf diese Weise ist es in vorteilhafter Weise möglich, einen "Rückstoßeffekt", der möglicherweise bei einer Linearverschiebung von nur einem Formelement auftreten würde, zu kompensieren.

Zur Unterstützung der Entformung eines fertigen Glasstopfens kann Preßluft in die Negativform eingeblasen werden, wobei vorteilhafterweise zumindest eine Zuleitung zu der Negativform sowohl zum Anlegen von Unterdruck als auch zum Einblasen von Druckluft vorgesehen ist. Ein Umschalten von Unterdruck auf Überdruck, gegebenenfalls über einen drucklosen Zustand, kann erfindungsgemäß mittels eines Ventils, vorteilhafterweise mittels eines Magnetventils, gesteuert werden.

Ferner ist zum Entnehmen des fertigen Glasgegenstandes eine Saugvorrichtung, beispielsweise in Form eines Saugnapfs, vorgesehen, mittels der der Glasgegenstand in einen Abkühl- und/oder Lagerbereich oder dgl. verbracht werden kann.

Selbstverständlich kann hierzu auch eine Greifvorrichtung anstelle einer saugnapfähnlichen Saugvorrichtung verwendet werden.

Ferner wird die erfindungsgemäße Aufgabe durch eine Vorrichtung zum Herstellen von Glasgegenständen, insbesondere Verschlußkörpern aus Glas, wie beispielsweise Glasstopfen, gelöst, die aus einem eine Negativform für einen herzustellenden Glasgegenstand aufweisenden Gehäuse bestehen, wobei die Negativform geeignet ist, flüssiges oder pastöses Glas aufzunehmen, und wenigstens eine mit der Negativform kommunizierende Leitung vorgesehen ist, mittels der ein vordefinierter Fluiddruck, insbesondere Unterdruck, an die Negativform anlegbar ist.

Wie vorerwähnt, besteht ein wesentlicher Gedanke der Erfindung darin, daß sich das in die Negativform verbrachte Glas lediglich aufgrund des angelegten Unterdrucks und seines Eigengewichts an die Wandung der Negativform anlegt. Der Unterdruck wird hierbei so an die Negativform angelegt, daß in der gesamten Negativform ein einheitlicher Unterdruck wirkt, wobei betont sei, daß der Unterdruck erfindungsgemäß nicht unmittelbar direkt im Inneren der Negativform anliegen muß, sondern auch durch definierte Undichtigkeiten der Negativform auf deren inneres Volumen einwirken kann, wobei der Unterdruck in diesem Fall auch in den die Negativform umgebenden Gehäuseteilen wirkt. Auf diese Weise ist es beispielsweise möglich, einen eine Nut für einen späteren Dichtungsring begrenzenden Steg auszubilden, wobei flüssiges Glas in einen Spalt eindringt und sich innerhalb dieses Spaltes aufgrund des temperierten Gehäuses, das temperaturabführend wirkt, verfestigt. Durch das Verfestigen wird die ursprünglich ausgenutzte Undichtigkeit versiegelt, so daß im Anschluß nur noch ein Unterdruck im Hauptvolumen der Negativform anliegt.

Erfindungsgemäß ist wenigstens ein Magnetventil vorgesehen, mittels dem der an der Negativform anliegende Druck von einem System zur Erzeugung von Unterdruck, gegebenenfalls über einen drucklosen Zustand, auf ein System zur Erzeugung von Überdruck, und umgekehrt, umschaltbar ist.

Auf diese Weise ist es möglich, die gleichen Leitungen, durch die der Unterdruck auf die Negativform angewandt wird, auch zur Leitung von Überdruck in Richtung Negativform zu verwenden, mittels dem ein Entformen des fertigen Glaskörpers vereinfacht wird.

Wie vorerwähnt, ist zumindest die Negativform und/oder ein die Negativform aufweisendes Gehäuses temperierbar ausgebildet, wobei erfindungsgemäß eine Kühlung auf eine Temperatur im Bereich von 50°C bis maximal 70°C vorgesehen ist. Die Kühlung erfolgt kostengünstig mit Wasser, wobei selbstverständlich auch andere Kühlfluide Anwendung finden können. Die Kühlung kann durch Kühlrohre erfolgen, die an oder in dem Gehäuse angeordnet sind, oder durch ein Kühlfluid, das das Gehäuse umspült.

Ferner ist die Negativform, vorzugsweise durch eine Linearverschiebung, insbesondere mittels wenigstens einem Pneumatikzylinder, von wenigstens einem Formelement von die Negativform bildenden Formelementen öffenbar, so daß auch Glasgegenstände mit Hinterschneidungen in fertigem Zustand einfach aus der Negativform entnommen werden können.

Darüber hinaus wird die Aufgabe erfindungsgemäß durch eine Anlage zur Herstellung von Glasgegenständen, insbesondere Verschlußkörpern aus Glas, wie beispielsweise Glasstopfen, gelöst, wobei mehrere Vorrichtungen gemäß den vorstehenden Ausführungen nebeneinander angeordnet und synchron betreibbar sind. Auf diese Weise ist es möglich, den Durchsatz einer solchen Anlage deutlich zu steigern, wobei in vorteilhafter Weise die Vorrichtungen in der Anlage beweglich angeordnet sind und, insbesondere stationsweise, verfahrbar sind. Auf diese Weise ist es möglich, unter Ausnutzung nur eines Zuleitungssystems für das flüssige Glas mehrere erfindungsgemäße Vorrichtungen zu beschicken, wobei die herzustellenden Glasgegenstände während des Verfahrens der Vorrichtungen abkühlen und oberflächenwärmebehandelt werden können. Darüber hinaus können die Vorrichtungen erfindungsgemäß so verfahren werden, daß Wege innerhalb der Herstellungsräume verkürzt werden, beispielsweise, indem die glasgefüllten Vorrichtungen zum Entformen bereits in die Nähe einer Lager-, Abkühl- oder Weitertransportvorrichtung bewegt werden.

Ferner wird die erfindungsgemäße Aufgabe durch die Verwendung einer vorerwähnten Vorrichtung sowie einer vorerwähnten Anlage zum Herstellen von Glasgegenständen, insbesondere Glasstopfen, gelöst.

Weitere Ausführungsformen der Erfindung ergeben sich aus den Unteransprüchen.

Nachfolgend wird die Erfindung anhand eines Ausführungsbeispiels beschrieben, das anhand der Abbildungen näher erläutert wird. Hierbei zeigen:
- Fig. 1: eine erste Ausführungsform einer erfindungsgemäßen Vorrichtung; und
- Fig. 2: einen Detailausschnitt der Ausführungsform nach Fig. 1.

In der nachfolgenden Beschreibung werden für gleiche und gleich wirkende Teile dieselben Bezugsziffern verwendet.

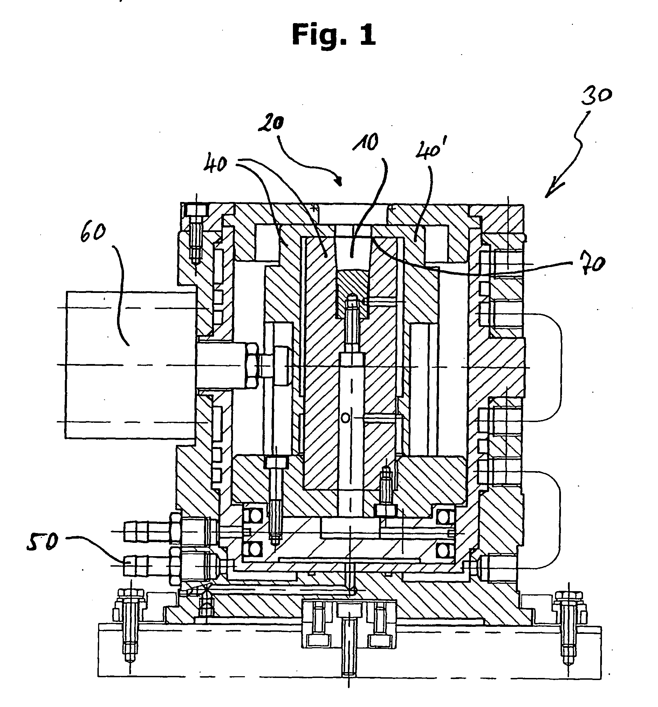

Fig. 1 zeigt eine erste Ausführungsform einer erfindungsgemäßen Vorrichtung mit einer Negativform 10, die in einem Gehäuse 30 angeordnet ist. In die Negativform kann durch eine Einfüllöffnung 20 flüssiges Glas in die Negativform gefüllt werden. Ferner sind in der Figur Formteile 40, 40' erkennbar, die mittels einer Linearbewegung, die über einen Pneumatikzylinder 60 ausgeführt werden kann, bewegt werden können, so daß der fertige Glasgegenstand entformt werden kann. Unterhalb der Negativform 10 befindet sich ein Bereich, über den ein Vakuum bzw. ein Unterdruck, über die Zuleitung 50 an die Negativform 10 bzw. das Gehäuse 30 angelegt werden kann.

Zum Entformen eines fertigen Glasgegenstandes werden die Formelemente 40, 40' linear zur Seite bewegt, so daß der Glasstopfen mittels Preßluft und eines Saugnapfes aus der Negativform 10 entnommen werden kann. Die Ausbildung eines Steges 70 ist dadurch realisiert, daß die Formelemente 40, 40' mit ihrer unteren an die Negativform angrenzenden Kante 80 einen Spalt ausbilden, in den über eine definierte Undichtigkeit Glas in einem durch Versuche bestimmten Ausmaß eindringen kann. Durch eine Linearverschiebung der Formelemente 40, 40' nach außen wird dieser Steg 70 zum Entformen freigegeben.

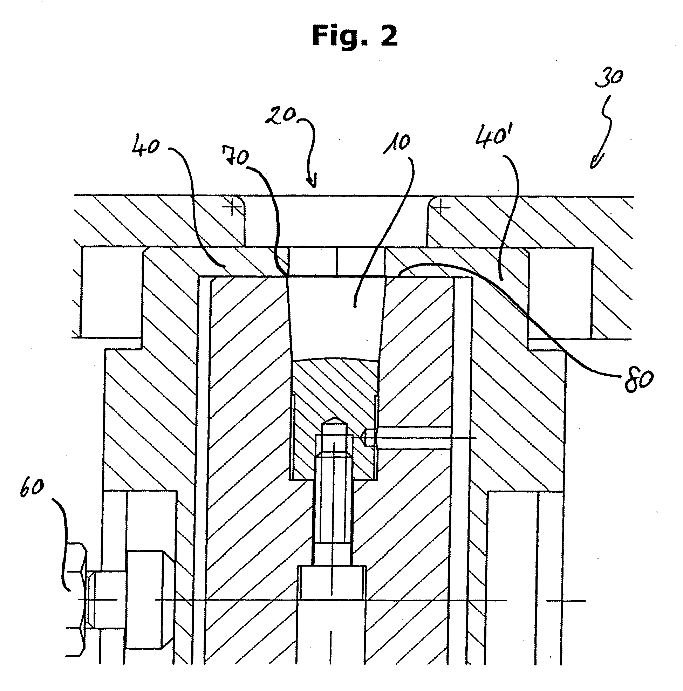

In Fig. 2 sind Details der Vorrichtung im Bereich der Negativform 10 vergrößert dargestellt.

Zusammenfassend sei festgehalten, daß die Erfindung ein hocheffizientes, schnelles und kostengünstiges Verfahren zum Herstellen von Glasgegenständen, wie beispielsweise Glasstopfen, angibt, wobei unter Vermeidung eines Kontaktes mit einem Preßstempel zum einen eine homogene und ästhetische Oberfläche des Glasstopfens geschaffen werden kann. Durch die Anwendung von Unterdruck ist eine Formgebung des Glasgegenstands an sehr vielfältige Oberflächenbeschaffenheiten und Negativformen möglich, und darüber hinaus ist eine Reinigung und Wartung der erfindungsgemäßen Vorrichtung gegenüber Vorrichtungen gemäß dem Stand der Technik aufgrund eines deutlich einfacheren Aufbaus und Konzeption der erfindungsgemäßen Vorrichtung vereinfacht, wobei auch die Wartungsintervalle der erfindungsgemäßen Vorrichtung und durch das erfindungsgemäße Verfahren deutlich länger sind als beim Stand der Technik.

### Bezugszeichenliste:

- 10: Negativform
- 20: Einfüllöffnung
- 30: Gehäuse
- 40, 40': Formelemente
- 50: Leitung
- 60: Pneumatikzylinder
- 70: Steg
- 80: Kante

## Patentansprüche

1. Verfahren zum Herstellen von Glasgegenständen, insbesondere Verschlußkörpern aus Glas, wie beispielsweise Glasstopfen, wobei der folgende Schritt durchgeführt wird:
a) Einfüllen einer Portionseinheit von flüssigem oder pastösem Glas in eine Negativform (10) eines herzustellenden Gegenstands;
**dadurch gekennzeichnet, dass**
ferner die folgenden Schritte durchgeführt werden:
b) Anlegen von Unterdruck an die Negativform (10) für einen Zeitraum, der ausreicht, daß das flüssige oder pastöse Glas in die Negativform (10) gesaugt und in eine paßgenaue Anlage mit der Wandung der Negativform (10) verbracht wird, und
Wärmebehandeln einer äußeren Oberfläche des in der Negativform (10) befindlichen Glases;
c) Abkühlen und Entformen des geformten Glasgegenstands.

2. Verfahren nach Anspruch 1,
**dadurch gekennzeichnet, daß**
die Portionseinheit von flüssigem oder pastösem Glas tropfenförmig in die Negativform (10) eingefüllt wird.

3. Verfahren nach Anspruch 1,
**dadurch gekennzeichnet, daß**
die Portionseinheit von flüssigem oder pastösem Glas von einem Strang von flüssigem oder pastösem Glas abgeschnitten und in die Negativform (10) eingefüllt wird.

4. Verfahren nach einem der vorhergehenden Ansprüche,
**dadurch gekennzeichnet, daß**
die Negativform (10) und/oder ein die Negativform (10) aufweisendes Gehäuse (30) temperiert, insbesondere gekühlt, vorzugsweise wassergekühlt, wird.

5. Verfahren nach einem der vorhergehenden Ansprüche,
**dadurch gekennzeichnet, daß**
die Negativform (10) zum Entformen, vorzugsweise durch eine Linearverschiebung von wenigstens einem Formelement (40) von die Negativform (10) bildenden Formelementen (40, 40'), geöffnet wird.

6. Verfahren nach einem der vorhergehenden Ansprüche,
**dadurch gekennzeichnet, daß**
zum Entformen Pressluft in die Negativform (10) eingeblasen wird.

7. Verfahren nach einem der vorhergehenden Ansprüche,
**dadurch gekennzeichnet, daß**
zumindest eine Zuleitung (50) zu der Negativform (10) sowohl zum Anlegen von Unterdruck als auch zum Einblasen von Druckluft verwendet wird, wobei ein Umschalten von Unterdruck auf Überdruck, gegebenenfalls über einen drucklosen Zustand, vorzugsweise mittels eines Ventils, insbesondere Magnetventils, gesteuert wird.

8. Verfahren nach einem der vorhergehenden Ansprüche,
**dadurch gekennzeichnet, daß**
ein Entnehmen des Glasgegenstands unter Zuhilfenahme einer Saugvorrichtung durchgeführt wird.

9. Vorrichtung zum Herstellen von Glasgegenständen, insbesondere Verschlußkörpern aus Glas, wie beispielsweise Glasstopfen, bestehend aus einem eine Negativform (10) für einen herzustellenden Glasgegenstand aufweisenden Gehäuse (30), wobei die Negativform (10) geeignet ist, flüssiges oder pastöses Glas aufzunehmen,
**dadurch gekennzeichnet, dass**
wenigstens eine mit der Negativform (10) kommunizierende Leitung (50) vorgesehen ist, mittels der ein vordefinierter Fluiddruck an die Negativform (10) anlegbar und das Gehäuse (30) ferner temperierbar ausgebildet ist, so dass herzustellende Glasgegenstände oberflächenwärmebehandelbar sind.

10. Vorrichtung nach Anspruch 9,
**dadurch gekennzeichnet, daß**
wenigstens ein Magnetventil vorgesehen ist, mittels dem der an der Negativform-(10) anliegende Druck von einem System zur Erzeugung von Unterdruck, gegebenenfalls über einen drucklosen Zustand, auf ein System zur Erzeugung von Überdruck umschaltbar ist.

11. Vorrichtung nach einem der Ansprüche 9 oder 10,
**dadurch gekennzeichnet, daß**
die Negativform (10) und/oder ein die Negativform (10) aufweisendes Gehäuse (30) kühlbar, vorzugsweise wasserkühlbar, ist, wobei insbesondere das Gehäuse durchziehende Kühlleitungen vorgesehen sind.

12. Vorrichtung nach einem der Ansprüche 9 bis 11,
**dadurch gekennzeichnet, daß**
die Negativform (10), vorzugsweise durch eine Linearverschiebung, insbesondere mittels wenigstens einem Pneumatikzylinder (60), von wenigstens einem Formelement (40) von die Negativform (10) bildenden Formelementen (40, 40'), öffenbar ist.

13. Anlage zur Herstellung von Glasgegenständen, insbesondere Verschlußkörpern aus Glas, wie beispielsweise Glasstopfen,
**dadurch gekennzeichnet, daß**
mehrere Vorrichtungen gemäß einem der Ansprüche 9 bis 12 vorgesehen sind, die nebeneinander angeordnet und synchron betreibbar sind.

14. Anlage nach Anspruch 13,
**dadurch gekennzeichnet, daß**
die Vorrichtungen an der Anlage beweglich angeordnet und, insbesondere stationsweise, verfahrbar sind.

15. Verwendung einer Vorrichtung nach einem der Ansprüche 9 bis 12 und/oder einer Anlage nach einem der Ansprüche 13 oder 14 zum Herstellen von Glasstopfen.

## Claims

1. Method of producing glass articles, especially closure bodies of glass such as, for example, glass stoppers, wherein the following step is carried out:
a) introducing a portion unit of liquid or paste-like glass into a negative mould (10) of an article to be produced;
**characterised in that**
furthermore the following steps are carried out:
b) applying negative pressure to the negative mould (10) for a period which is sufficient for the liquid or paste-like glass to be sucked into the negative mould (10) and to be brought into exactly fitting contact with the walls of the negative mould (10), and
heat-treating an external surface of the glass located in the negative mould (10);
c) cooling and de-moulding the moulded glass article.

2. Method according to claim 1,
**characterised in that**
the portion unit of liquid or paste-like glass is introduced in gob form into the negative mould (10).

3. Method according to claim 1,
**characterised in that**
the portion unit of liquid or paste-like glass is cut off from a thread of liquid or paste-like glass and introduced into the negative mould (10).

4. Method according to one of the preceding claims,
**characterised in that**
the negative mould (10) and/or a housing (30) containing the negative mould (10) is/are temperature-adjusted, especially cooled, preferably water-cooled.

5. Method according to one of the preceding claims,
**characterised in that**,
for de-moulding, the negative mould (10) is opened, preferably by means of a linear displacement of at least one mould element (40) of mould elements (40, 40') forming the negative mould (10).

6. Method according to one of the preceding claims,
**characterised in that**,
for de-moulding, compressed air is blown into the negative mould (10).

7. Method according to one of the preceding claims,
**characterised in that**
there is used at least one supply line (50) to the negative mould (10) both for applying negative pressure and also for blowing in compressed air, switching-over from negative pressure to positive pressure, optionally *via* a non-pressurised state, being controlled preferably by means of a valve, especially a solenoid valve.

8. Method according to one of the preceding claims,
**characterised in that**
de-moulding of the glass article is carried out with the aid of a suction device.

9. Apparatus for producing glass articles, especially closure bodies of glass such as, for example, glass stoppers, comprising a housing (30) containing a negative mould (10) for a glass article to be produced, the negative mould (10) being suitable for accommodating liquid or paste-like glass,
**characterised in that**
there is provided at least one line (50) which is in communication with the negative mould (10) and by means of which a predefined fluid pressure can be applied to the negative mould (10), and the housing (30) is furthermore of temperature-adjustable construction so that glass articles being produced can be surface-heat-treated.

10. Apparatus according to claim 9,
**characterised in that**
there is provided at least one solenoid valve by means of which the pressure applied to the negative mould (10) can be switched over from a system for producing negative pressure, optionally *via* a non-pressurised state, to a system for producing positive pressure.

11. Apparatus according to one of claims 9 or 10,
**characterised in that**
the negative mould (10) and/or a housing (30) containing the negative mould (10) is/are coolable, preferably water-coolable, there especially being provided cooling lines which pass through the housing.

12. Apparatus according to one of claims 9 to 11,
**characterised in that**
the negative mould (10) is arranged to be opened, preferably by a linear displacement - especially by means of at least one pneumatic cylinder (60) - of at least one mould element (40) of mould elements (40, 40') forming the negative mould (10).

13. Plant for producing glass articles, especially closure bodies of glass such as, for example, glass stoppers,
**characterised in that**
there are provided a plurality of apparatuses according to one of claims 9 to 12, which are arranged next to one another and are operable synchronously.

14. Plant according to claim 13,
**characterised in that**
the apparatuses in the plant are movably arranged and are displaceable, especially station-wise.

15. Use of an apparatus according to one of claims 9 to 12 and/or of a plant according to one of claims 13 or 14, in the production of glass stoppers.

## Revendications

1. Procédé pour fabriquer des objets en verre, en particulier des corps de fermeture en verre, tels que des bouchons de verre, dans lequel on réalise l'étape suivante :
a) le versement d'une portion unitaire de verre liquide ou pâteux dans un moule négatif (10) d'un objet à fabriquer ;
**caractérisé en ce que**
l'on réalise en outre les étapes suivantes :
b) l'application d'une dépression au moule négatif (10) pendant une période de temps suffisante pour que le verre liquide ou pâteux soit aspiré dans le moule négatif (10) et appliqué dans un emplacement rigoureusement ajusté à la paroi du moule négatif (10), et
le traitement thermique d'une surface externe du verre présent dans le moule négatif (10) ;
c) le refroidissement et le démoulage de l'objet de verre moulé.

2. Procédé selon la revendication 1,
**caractérisé en ce que**
la portion unitaire de verre liquide ou pâteux est versée goutte à goutte dans le moule négatif (10).

3. Procédé selon la revendication 1,
**caractérisé en ce que**
la portion unitaire de verre liquide ou pâteux est coupée d'une barre de verre liquide ou pâteux et versée dans le moule négatif (10).

4. Procédé selon l'une quelconque des revendications précédentes, **caractérisé en ce que**
le moule négatif (10) et/ou un boîtier (30) portant le moule négatif (10) est ou sont soumis à un équilibrage de température, en particulier refroidi(s), de préférence refroidi(s) à l'eau.

5. Procédé selon l'une quelconque des revendications précédentes, **caractérisé en ce que**
le moule négatif (10) est ouvert pour démouler, de préférence par déplacement linéaire d'au moins un élément de moulage (40) des éléments de moulage (40, 40') formant le moule négatif (10).

6. Procédé selon l'une quelconque des revendications précédentes, **caractérisé en ce que**,
pour le démoulage, de l'air comprimé est injecté dans le moule négatif (10).

7. Procédé selon l'une quelconque des revendications précédentes, **caractérisé en ce que**
l'on utilise au moins une conduite d'alimentation (50) menant au moule négatif (10) autant pour l'application d'une dépression que pour l'injection d'air comprimé, dans lequel un passage d'une dépression à une surpression, éventuellement via un état sans pression, est commandé de préférence au moyen d'une soupape, en particulier d'une soupape magnétique.

8. Procédé selon l'une quelconque des revendications précédentes, **caractérisé en ce que**
l'on procède à un retrait de l'objet en verre à l'aide d'un dispositif d'aspiration.

9. Dispositif pour fabriquer des objets en verre, en particulier des corps de fermeture en verre, tels que des bouchons de verre, constitué d'un boîtier (30) comportant un moule négatif (10) pour un objet en verre à fabriquer, dans lequel le moule négatif (10) est approprié pour recevoir du verre liquide ou pâteux, **caractérisé en ce que**
l'on prévoit au moins une conduite (50) communiquant avec le moule négatif (10), au moyen de laquelle une pression de liquide prédéfinie peut être appliquée au moule négatif (10) et le boîtier (30) est conformé en outre de manière à pouvoir être équilibré en température de sorte que les objets en verre à fabriquer puissent être soumis à un traitement thermique de surface.

10. Dispositif selon la revendication 9,
**caractérisé en ce que**
l'on prévoit au moins une soupape magnétique, au moyen de laquelle on peut faire passer la pression appliquée au moule négatif (10) d'un système pour générer une dépression, éventuellement via un état sans pression, à un système pour générer une surpression.

11. Dispositif selon l'une quelconque des revendications 9 ou 10,
**caractérisé en ce que**
le moule négatif (10) et/ou un boîtier (30) comportant le moule négatif (10) peut ou peuvent être refroidis, de préférence refroidis à l'eau, en prévoyant en particulier des conduites de refroidissement traversant le boîtier.

12. Dispositif selon l'une quelconque des revendications 9 à 11,
**caractérisé en ce que**
le moule négatif (10) peut être ouvert de préférence par déplacement linéaire, en particulier au moyen d'au moins un cylindre pneumatique (60), à partir d'au moins un élément de moulage (40) des éléments de moulage (40, 40') formant le moule négatif (10).

13. Installation de fabrication d'objets en verre, en particulier de corps de fermeture en verre, tels que des bouchons de verre,
**caractérisée en ce que**
l'on prévoit plusieurs dispositifs selon l'une quelconque des revendications 9 à 12, qui sont agencés côte à côte et peuvent fonctionner en synchronisme.

14. Installation selon la revendication 3,
**caractérisée en ce que**
les dispositifs sont agencés de manière à pouvoir se déplacer dans l'installation et peuvent en particulier être déplacés par étapes.

15. Utilisation d'un dispositif selon l'une quelconque des revendications 9 à 12 et/ou d'une installation selon l'une quelconque des revendications 13 ou 14 pour fabriquer des bouchons de verre.
